(19) Europäisches Patentamt
European Patent Office
Office européen des brevets

(11) **EP 3 227 827 B1**

(12) **EUROPEAN PATENT SPECIFICATION**

(45) Date of publication and mention
of the grant of the patent:
**16.08.2023 Bulletin 2023/33**

(21) Application number: **15802059.4**

(22) Date of filing: **26.11.2015**

(51) International Patent Classification (IPC):
**G06V 20/58** (2022.01)

(52) Cooperative Patent Classification (CPC):
**G06T 7/269; G06V 20/58;** G06T 2207/30252

(86) International application number:
**PCT/EP2015/077818**

(87) International publication number:
**WO 2016/087317 (09.06.2016 Gazette 2016/23)**

(54) **DRIVER ASSISTANCE SYSTEM, MOTOR VEHICLE AND METHOD FOR CLASSIFYING A FLOW VECTOR**

FAHRERASSISTENZSYSTEM, KRAFTFAHRZEUG UND VERFAHREN ZUR KLASSIFIZIERUNG EINER FLUSSVEKTOR

SYSTÈME D'ASSISTANCE DE PILOT, VÉHICULE ET MÉTHODE DE CLASSIFICATION UN VECTEUR DE FLUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2014 DE 102014117708**

(43) Date of publication of application:
**11.10.2017 Bulletin 2017/41**

(73) Proprietor: **Connaught Electronics Ltd.**
**Tuam, County Galway (IE)**

(72) Inventors:
• **NGUYEN, Duong-Van**
**63263 Neu-Isenburg (DE)**
• **HUGHES, Ciáran**
**Tuam**
**County Galway (IE)**
• **HORGAN, Jonathan**
**Tuam**
**County Galway (IE)**

(74) Representative: **Jauregui Urbahn, Kristian et al**
**Valeo Schalter und Sensoren GmbH**
**CDA-IP**
**Laiernstraße 12**
**74321 Bietigheim-Bissingen (DE)**

(56) References cited:
**EP-A1- 2 081 154          EP-A1- 2 701 093**
**DE-A1-102012 023 060**

• **DIANSHENG CHEN ET AL: "Moving object detection by multi-view geometric constraints and flow vector classification", ROBOTICS AND BIOMIMETICS (ROBIO), 2010 IEEE INTERNATIONAL CONFERENCE ON, IEEE, 14 December 2010 (2010-12-14), pages 1630-1634, XP031922368, DOI: 10.1109/ROBIO.2010.5723574 ISBN: 978-1-4244-9319-7**
• **BOLLES R C ET AL: "EPIPOLAR-PLANE IMAGE ANALYSIS: AN APPROACH TO DETERMINING STRUCTUREFROM MOTION", INTERNATIONAL JOURNAL OF COMPUTER VISION, DORDRECHT, NL, 1 January 1987 (1987-01-01), pages 7-55, XP000572465, DOI: 10.1007/BF00128525**

**EP 3 227 827 B1**

## Description

The invention relates to a method for classifying a flow vector of an object point of an object in an environmental region of a motor vehicle. The flow vector is determined according to the optical flow method in an image sequence captured by a camera of the motor vehicle. A first pixel of a first image of the image sequence captured by means of the camera and a first projection center, and a corresponding second pixel of a second image of the image sequence captured by means of the camera and a second projection center different from the first projection center are connected by the flow vector. In addition, the invention relates to a driver assistance system for a motor vehicle as well as to a motor vehicle with a driver assistance system.

Methods for classifying a flow vector are known from the prior art. For example, a method is known, which is able to separate and classify flow vectors of a moved object and flow vectors of a static object, respectively. In the method, statistical deviations of the orientation of the flow vectors are taken into account, which are compared to other flow vectors, which extend such that they would intersect or meet in an expansion focus or vanishing point. Now, it is assumed that the flow vectors, which would not intersect the other flow vectors in the expansion focus, can be associated with the class moved or dynamic. The flow vectors, which would intersect in the expansion focus, are associated with the class static.

However, it is disadvantageous in the method that the calculation or location of the intersections of the flow vectors in a future image to determine the expansion focus is computationally expensive and thus time consuming. Furthermore, the method is sensitive with respect to noise.

In "Moving Object Detection by Multi-View Geometric Constraints and Flow Vector Classification" from Diansheng Chen, Yuxin Chen and Tianmiao Wang (Proceedings of the 2010 IEEE Int. Conf. on Robotics and Biomimetics, p. 1630) is described an alternative to detect moving objects with moving cameras using flow vector classification and multi-view geometric constraints,

It is the object of the invention to provide a method, a driver assistance system as well as a motor vehicle, by which or in which the flow vectors can be particularly effectively classified or associated with a certain class.

According to the invention, this object is solved by a method, by a driver assistance system as well as by a motor vehicle having the features according to the respective independent claims.

In a method according to the invention, a flow vector of an object point of an object in an environmental region of a motor vehicle is classified. The flow vector is determined according to the optical flow method in an image sequence captured by a camera of the motor vehicle. A first pixel of a first image of the image sequence captured by means of the camera and a first projection center and a corresponding second pixel of a second image of the image sequence captured by means of the camera and a second projection center different from the first projection center are connected by the flow vector. An essential idea of the invention is to be regarded in that the following steps are performed. A ray is determined from the first projection center to the first pixel and further to the object point. Furthermore, a first auxiliary point is determined on the ray, which is disposed between the first pixel and the object point, a second auxiliary point is determined on the ray, which is disposed farther away from the first projection center compared to the object point, and a plurality of auxiliary points are determined on the ray at different intervals on the ray. -The first auxiliary point, the second auxiliary point and the plurality of auxiliary points are projected into the second image to form a convex polyline on the second image by performing a translation and rotation corresponding to the motion of the motor vehicle. A projected first auxiliary point of the first auxiliary point and a projected second auxiliary point of the second auxiliary point are connected by a connecting line segment. A distance from the second pixel to the connecting line segment is determined and the flow vector of the second pixel is associated with a class static or a class dynamic depending on the determined distance.

Thus, by the method according to the invention, it becomes possible to classify the flow vector or to associate it with the class static or with the class dynamic. The description of the method according to the invention is effected based on a schematic illustration, which is usual in the epipolar geometry. The epipolar geometry is a mathematic model from the geometry, which represents the geometric relations between various camera images of the same object. With its help, the dependency between corresponding pixels can be described, thus the pixels, which an individual object point generates in the first image and in the second image and thus the first pixel and the second pixel, respectively. The usual representation in the epipolar geometry begins in that a ray through the pixel or the first pixel is developed from a projection center, which pierces the image or the first image in the first pixel. The ray runs on straight since the principle of a pinhole camera is taken as a basis for simplification. The ray running on straight then also encounters the object point of the object. The distance of the object point from the first image is not known and cannot be determined based on a single image, which has been captured with a conventional camera. The particularity in the schematic representation, as it is usual in the epipolar geometry, is in that the first image is drawn between the projection center and the object point. In reality, the projection center is located between the image or the first image and the object point. This particularity of the schematic representation is to be considered in the description of the method according to the invention.

In the epipolar geometry, now, the pixel of the first image can be searched on an epipolar line of the second image. The second pixel corresponding to the first pixel thus has to be located on the epipolar line of the second image according to the epipolar geometry. In order to be able to determine the epipolar line, usually, a fundamental matrix or a bifocal tensor is calculated, which contains the entire information about the epipolar geometry. The fundamental matrix is usually calculated with a seven-point algorithm or an eight-point algorithm. In the seven-point-algorithm, seven corresponding pixels are required, while at least eight corresponding pixels or pixel pairs are used in the eight-point algorithm.

In contrast thereto, in the method according to the invention, a fundamental matrix is not calculated and thus either not an epipolar line of the first pixel. In the method according to the invention, the first auxiliary point is determined such that it is disposed - in the usual manner of representation of the epipolar geometry - between the first pixel and the object point, which is for example 50 meters away from the camera, thus for example at a distance of 0.5 meters from the first pixel, while the second auxiliary point is farther away from the first pixel than the object point, thus for example 100 meters or farther away from the first pixel. In the method according to the invention, now, the first auxiliary point and the second auxiliary point are projected or transformed into the second image. The projected first auxiliary point and the projected second auxiliary point are connected by the connecting line segment. The connecting line segment is a line segment with a beginning and an end. The connecting line segment is now a partial area or a section of the epipolar line known from the prior art.

According to the method according to the invention, now, the distance from the second pixel corresponding to the first pixel and having been determined by means of the optical flow method, for example a Lucas-Kanade tracking, to the connecting line segment is determined. The distance is a perpendicular if letting fall a perpendicular from the second pixel to the connecting line segment is possible, otherwise, it is the shortest connection from the second pixel to the connecting line segment. Depending on the determined distance, now the flow vector, which is directed or points to the second pixel, is associated with the class static or with the class dynamic. The pixels associated with the class static are in particular associated with static objects. The pixels associated with the class dynamic are in particular associated with moved objects.

In particular, a plurality of auxiliary points on the ray is determined and projected into the second image. This allows a convex polyline or a plurality of connecting line segment to be determined more accurately. This can be particularly important when calibration parameters of the camera can be determined only inaccurate, and/or no optimal pinhole camera model can be determined. The plurality of auxiliary points is preferably arranged at different, as well as possible distributed intervals on the ray.

In particular, it is provided that the flow vector is associated with the class static if the determined distance falls below a predetermined first limit value, and the flow vector is associated with the class dynamic if the determined distance exceeds the predetermined first limit value. The closer the second pixel is to the connecting line segment, the more likely or more reliably the second pixel can be assumed as a static pixel. The farther the second pixel is away from the connecting line segment, the higher the likelihood is that the second pixel is a dynamic pixel. Presently, thus, an exact boundary is provided by the first limit value to be able to associate the flow vector with the class static or the class dynamic.

Furthermore, it is in particular provided that a first parameter set of an interior orientation of the camera and/or a second parameter set of an exterior orientation of the camera are taken into account in the projection. The interior orientation of the camera describes the position of the projection center related to the image plane. For example, the coordinates of the principal point and/or the chamber constant or focal length of a lens of the camera and/or imaging errors of the lens belong to this. The exterior orientation describes a posture and a position of the camera during the capture related to the object. The exterior orientation for example includes a translational component and/or a rotational component. It is advantageous that the projection of the first auxiliary point and/or the second auxiliary point into the second image can thereby be particularly precisely performed.

Preferably, it is provided that a motion vector of the motor vehicle determined by means of odometry is taken into account in the projection. Thus, the motion vector describes the intrinsic motion of the motor vehicle and thus the intrinsic motion of the camera. The motion vector can for example be from information transmitted via the CAN bus of the motor vehicle. This information can for example be provided by corresponding sensors like a sensor for determining a number of revolutions of a wheel of the motor vehicle and/or a steering angle sensor. Additionally or alternatively, the motion vector can also be effected by means of the so-called visual odometry, in which the determination of the motion is effected based on the image sequence. Hereto, for example, characteristic pixels can be used to determine the motion of the camera and thus the motion of the motor vehicle. In particular, the estimation of the intrinsic motion of the camera based on the image information is referred to as visual odometry. Thus, it is advantageous that the first auxiliary point and/or the second auxiliary point can be particularly precisely projected into the second image due to the motion vector. It is further advantageous that the motion vector can be determined based on various information and thus the determination can be particularly precisely and/or reliably effected.

Furthermore, it is provided that the flow vector in the class dynamic is associated with a class noise if an orientation variation and/or a magnitude variation of the flow vector of a third pixel of a third image of the image sequence exceeds a predetermined first portion compared to the second pixel. Thus, two consecutive flow vectors, which have been determined from the same object point, can be compared to each other. Furthermore, it can be assumed that a speed variation of the object within the time, which elapses from the capture of the second image to the capture of the third image, remains within a predetermined frame. Thus, it can also be provided that the orientation variation and/or the magnitude variation of the flow vector falls below the predetermined first portion if the flow vector is associated with the class dynamic. The predetermined first portion thus expresses a ratio, which describes an orientation variation and/or a magnitude variation of the flow vector from the first pixel to the second pixel and of the flow vector from the second pixel to the third pixel. The ratio of the orientation variation and/or the magnitude variation can therefore determine that the flow vector is associated with the class noise if the ratio or the predetermined first portion of the orientation variation and/or the magnitude variation of the flow vector is exceeded. Thus, it is advantageous that the class dynamic can be more exactly or precisely and error-rectified provided, respectively, because outliers or flow vectors with greater deviations than the predetermined first portion are removed from the class dynamic and added to the class noise.

In particular, the method is performed for a plurality of flow vectors and herein, a plurality of distances is provided. Thus, the flow vectors can be mutually checked and the classification can be particularly precisely validated.

Furthermore, it is provided that a roadway unevenness of a roadway in the environmental region is recognized depending on the plurality of distances. The roadway unevenness can for example be a speed bump, which presents a constructional elevation of the roadway disposed transversely to the direction of travel of the motor vehicle. However, other roadway unevennesses as they for example occur at a construction site or a road damage can also be recognized. Thus, the roadway unevenness can for example be recognized in that the respective distance between the second pixel and the connecting line segment varies or exceeds a predetermined second limit value in the plurality of flow vectors. Thus, it is advantageous that the roadway unevenness can be recognized and thus further information about the environmental region can be provided.

Furthermore, it is provided that the roadway unevenness is recognized if a predetermined number of the flow vectors of the plurality of flow vectors each exceed a predetermined second limit value for the distance. This means that the roadway unevenness can be recognized if the predetermined number of the flow vectors, thus for example a predominant part of the flow vectors of the image sequence, respectively provides the distance such that the respective distance exceeds the predetermined second limit value. In other words, the roadway unevenness is recognized if many of the flow vectors suddenly provide a great distance, which is then defined in that the predetermined second limit value is exceeded. Thus, advantageously, the roadway unevenness can be particularly precisely and/or reliably and/or effectively recognized independently of other sensors of the motor vehicle.

Furthermore, it is provided that a direction and/or a magnitude of the flow vector of a third image following the second image is replaced with a direction and/or a magnitude of the flow vector of the second image if the roadway unevenness is recognized. This generally means that the direction and/or the magnitude of the flow vector are not adapted if a roadway unevenness is recognized. The advantage is that measurement errors are thereby avoided and a particularly exact result, thus a particularly exact classification of the flow vectors, can be provided.

In a further development, it is provided that a start of a movement, in particular a driving off, of the motor vehicle is recognized based on the flow vectors of the plurality of flow vectors, which are disposed in a lower area of the first image and/or the second image. In order to recognize the start of the movement, thus, the lower area of the first image and/or of the second image is for example exclusively used to consider the plurality of flow vectors or the flow vectors. The start of the movement can be a particular situation for the method according to the invention because preceding or historic flow vectors have not yet been provided and thus the result or the classification does not yet have reached the final accuracy. With the knowledge about the start of the movement, this can be counteracted or this fact can be considered in the evaluation of the classification for example with respect to the reliability and/or the accuracy.

Furthermore, it is provided that the start of the movement is recognized if less than a predetermined second portion of the plurality of flow vectors intersects in a vanishing point of the first image and/or of the second image by extending. Thus, the vanishing point is the point, in which all of the flow vectors or the plurality of flow vectors, which can be associated with static objects or the class static, would intersect. Thus, if all of the flow vectors of the class static are, for example linearly, extended, thus, they intersect substantially in the vanishing point. The start of the movement of the motor vehicle can now be recognized in that the predetermined second portion, thus for example a predominant portion, of the extended flow vectors would not meet in the vanishing point. Then, it can be assumed that the measurement results or the classification is inexactly or erroneously executed. This in turn can be considered in assessing the reliability and/or the accuracy of the classification. The use of the lower area of the first image and/or of the second image is advantageous in that the objects imaged in the lower area of the image usually are closer to the camera and thus generate longer flow vectors. The longer flow vectors offer the advantage that they are more significant and thus provide higher precision. It can be done without the upper part of the first image and/or of the second image because these objects are usually farther away and thus provide shorter flow vectors than the closer objects. The further advantage in the exclusive use of the lower area is that the determination or recognition of the start of the movement can be faster or more effectively performed than if an entire area of the first image and/or of the second image would be used.

Preferably, it is provided that at least one further auxiliary point is determined on the ray and the at least one further auxiliary point is projected into the second image as a projected further auxiliary point. The projected further auxiliary point thus allows finer sampling of the connecting line segment.

Furthermore, it is provided that the projected further auxiliary point is disposed with at least one further connecting line segment to the connecting line segment. With the further connecting line segment, the distance can be more precisely determined. If the distance can be more precisely determined, the classification can be more precisely or reliably be performed. This case is particularly helpful if a perfect spherical projection is not present for example due to the camera. By the connecting line segment and multiple further connecting line segments, a polyline results, which is preferably convex. The distance is then preferably described as the shortest range to the polyline.

A driver assistance system according to the invention for a motor vehicle includes at least one camera and an evaluation unit, which is adapted to perform a method according to the invention.

In a further embodiment, the camera includes a fish-eye lens. The fish-eye lens entails the advantage that an environmental region of the motor vehicle can be provided in a large area, with a large capturing angle, for example a horizontal angle, greater than or equal to 180°.

A motor vehicle according to the invention, in particular a passenger car, includes a driver assistance system according to the invention.

The preferred embodiments presented with respect to the method according to the invention and the advantages thereof correspondingly apply to the driver assistance system according to the invention as well as to the motor vehicle according to the invention.

Below, embodiments of the invention are explained in more detail based on schematic drawings.

There show:

Fig. 1    in schematic plan view an embodiment of a motor vehicle according to the invention with a driver assistance system;

Fig. 2    a schematic illustration of the determination of a first auxiliary point and a second auxiliary point on a ray from a first projection center to a first pixel;

Fig. 3    a schematic illustration of a connecting line segment from the first auxiliary point to the second auxiliary point and a distance from a second pixel to the connecting line segment;

Fig. 4    in schematic illustration the connecting line segment and at least one further connecting line segment with the distance from the second pixel to the connecting line segment;

Fig. 5    a schematic illustration of several connecting line segments in a second image of an image sequence of an environmental region of the motor vehicle;

Fig. 6    a schematic illustration of the second image with flow vectors and the connecting line segment, depending on which the flow vectors are classified;

Fig. 7    a schematic illustration of a first image, in which a start of a movement of the motor vehicle is recognized;

Fig. 8    a schematic illustration of the second image, in which a roadway unevenness of a roadway of the environmental region is recognized;

Fig. 9    a flow diagram, which shows, how the roadway unevenness is recognized; and

Fig. 10    a schematic illustration of the second image, in which the flow vectors are associated with a class dynamic or a class noise.

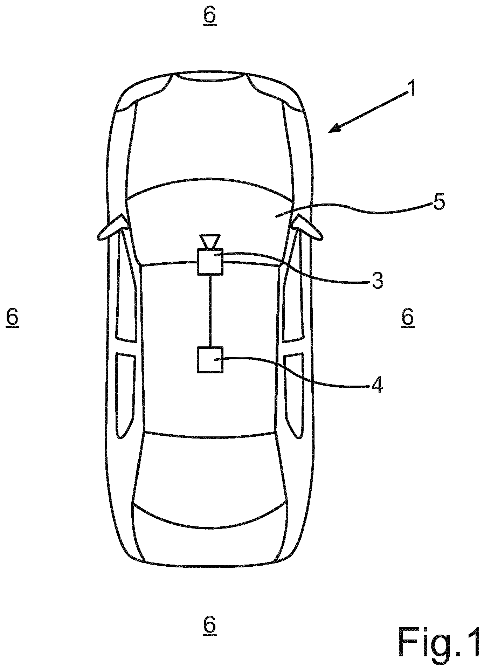

In Fig. 1, a plan view of a motor vehicle 1 with a driver assistance system 2 according to an embodiment of the invention is schematically illustrated. In the embodiment, the driver assistance system 2 includes a camera 3 and an evaluation unit 4. According to the embodiment in Fig. 1, the camera 3 is disposed behind a windshield 5 of the motor vehicle 1. However, the arrangement of the camera 3 is variously possible, however preferably such that an environmental region 6 of the motor vehicle 1 can be captured.

The camera 3 can be a CMOS camera or else a CCD camera or any image capturing device, which is able to provide an image sequence 7 of the environmental region 6 of the motor vehicle 1. Several such cameras 3 can also be employed. The camera 3 is a video camera, which continuously provides images of the image sequence 7. A first image 8 of the image sequence 7 and a second image 9 of the image sequence 7 are frames. The evaluation unit 4 then processes the image sequence 7 for example in real time.

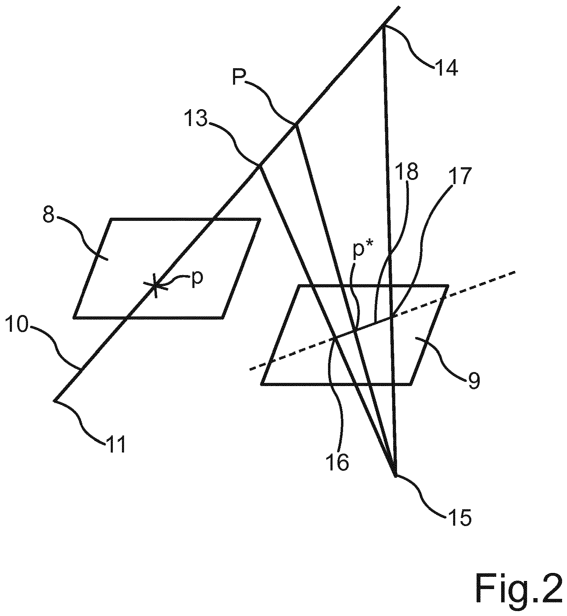

Fig. 2 schematically shows the first image 8 and the second image 9. Furthermore, a ray 10 connects a first projection center 11 of the camera 3 to a first pixel p of the first image 8. In addition, the ray 10 piercing the first image 8 at the location of the first pixel p passes an object point P of an object 12 in the environmental region 6. A first auxiliary point 13 is disposed on the ray 10, which is between the first pixel p and the object point P. The first auxiliary point 13 is preferably at a distance of 0.5 meters from the first pixel p. Furthermore, a second auxiliary point 14 is on the ray 10, which is farther away from the first pixel p than the object point P. The distance of the second auxiliary point 14 from the first pixel p is preferably 100 meters.

Fig. 2 further shows the second image 9 with a second pixel p*. The second pixel p* is the corresponding pixel of the first pixel p, which was tracked or determined with the optical flow method. The optical flow method can for example be a Lucas-Kanade method. The second image 9 moreover has a second projection center 15 of the camera 3. The camera 3 is in another position with the second projection center 15 than the camera 3 with the first projection center 11.

The first auxiliary point 13 and the second auxiliary point 14 are projected into the second image 9. A projected first auxiliary point 16 results from the projection of the first auxiliary point 13, and a projected second auxiliary point 17 results from the projection of the second auxiliary point 14.

The projection of the first auxiliary point 13 and/or of the second auxiliary point 14 to the projected first auxiliary point 16 and/or the projected second auxiliary point 17 can be performed in that a translation T and a rotation R are performed. This can be mathematically described as follows:

$$Q'(X,Y,Z) = R_{mat} \cdot Q(X,Y,Z) + T_{vec}, \tag{1}$$

wherein Q denotes the first auxiliary point 13 and/or the second auxiliary point 14 with the three coordinates X, Y, Z. Q' describes the projection of the first auxiliary point 13 and/or of the second auxiliary point 14. $R_{mat}$ is the rotation matrix and $T_{vec}$ is the translation vector of the motion of the motor vehicle 1 or of a motion vector of the motor vehicle 1. Thus, the intrinsic motion of the motor vehicle 1 can be compensated for or subtracted out by the motion vector.

The actual transformation or projection into the second image 9 is performed as follows:

$$q' = M_{int} \cdot M_{ext} \cdot Q'(X,Y,Z), \tag{2}$$

wherein q' is representative of the projected first auxiliary point 16 and/or the projected second auxiliary point 17 and a first parameter set $M_{int}$ describes an interior orientation of the camera 3, while a second parameter set $M_{ext}$ describes an exterior orientation of the camera 3.

The projected first auxiliary point 16 and the projected second auxiliary point 17 are connected by a connecting line segment 18. In an ideal case, the second pixel p* should be on the connecting line segment 18 if the corresponding object point P has not moved, but is static.

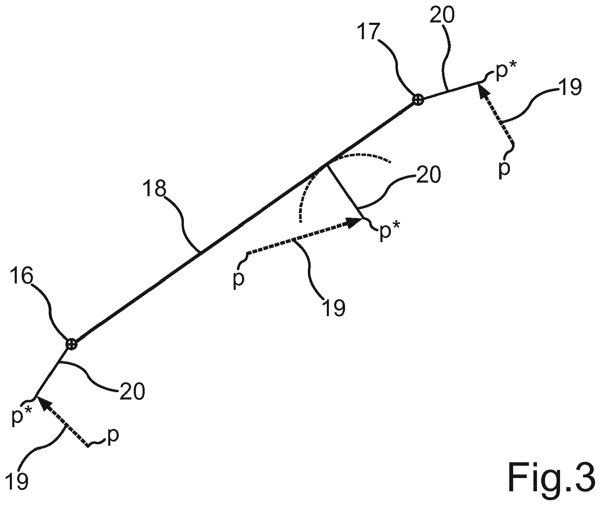

Fig. 3 shows the connecting line segment 18 from the projected first auxiliary point 16 to the projected second auxiliary point 17. A flow vector 19 from the first pixel p to the second pixel p* is drawn at three different locations in Fig. 3 to explain the determination of a distance 20. The distance 20 is measured from the second pixel p* as the shortest distance to the connecting line segment 18. If it is possible to let fall a perpendicular from the second pixel p* to the connecting line segment 18, thus, a perpendicular is let fall. If it is not possible to let fall a perpendicular, thus, the shortest possible connection from the second pixel p* to the connecting line segment 18 is selected, which thus necessarily adjoins to one of the two ends of the connecting line segment 18. Thus, the distance 20 is implemented as a perpendicular to the connecting line segment 18 or, if this is not possible, as a connection from the second pixel p* to the beginning of the connecting line segment 18 or the end of the connecting line segment 18. The beginning and the end of the connecting line segment 18 are determined by the projected first auxiliary point 16 and the projected second auxiliary point 17.

Depending on the distance 20, the respective flow vector 19 is associated with a class static or with a class dynamic. If the determined distance 20 falls below a predetermined first limit value, thus, the flow vector 19 is associated with the class static. If the determined distance 20 exceeds the predetermined first limit value, thus, the flow vector 19 is associated with the class dynamic.

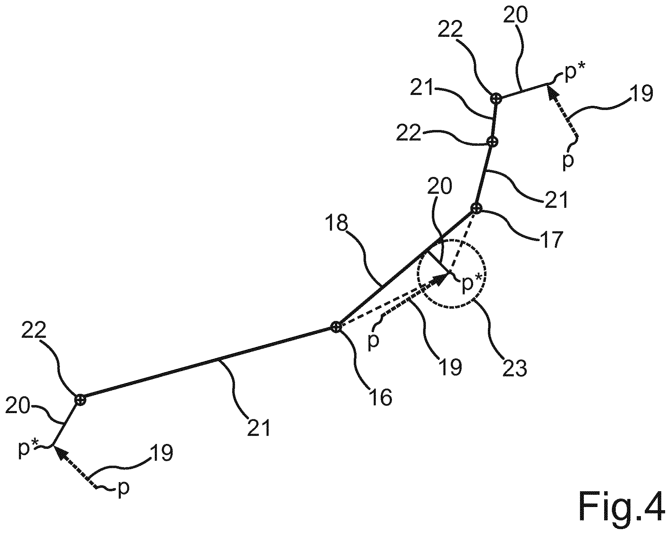

Fig. 4 shows the connecting line segment 18 and further connecting line segments 21. In the embodiment of Fig. 4, compared to the embodiment according to Fig. 3, the distance of the first auxiliary point 13 and the second auxiliary point 14 with respect to the first pixel p is different. The further connecting line segment 21 arises if a further auxiliary point on the ray 10 is projected into the second image 9 as a projected further auxiliary point 22. The distance 20, which describes the shortest range from the second pixel p* to the connecting line segment 18 or the further connecting line segment 21, can be determined with a distance circle 23. The distance circle 23 visualizes the shortest range of the distance 20. Fig. 4 shows a convex polyline, which is advantageous because the second pixel p* often is or ideally should be on the convex polyline for example due to the camera 3, in particular a lens of the camera 3.

In particular, a plurality of auxiliary points 13, 14 is determined, and projected into the second image 9. Thus, the convex polyline be determined accurately. This can be especially important if the first parameter set $M_{int}$ and/or the second parameter set $M_{ext}$ can be determined only inaccurate, and/or no optimal pinhole camera model can be determined. The plurality of auxiliary points 13, 14 is preferably arranged at different, as well as possible distributed intervals on the ray 10.

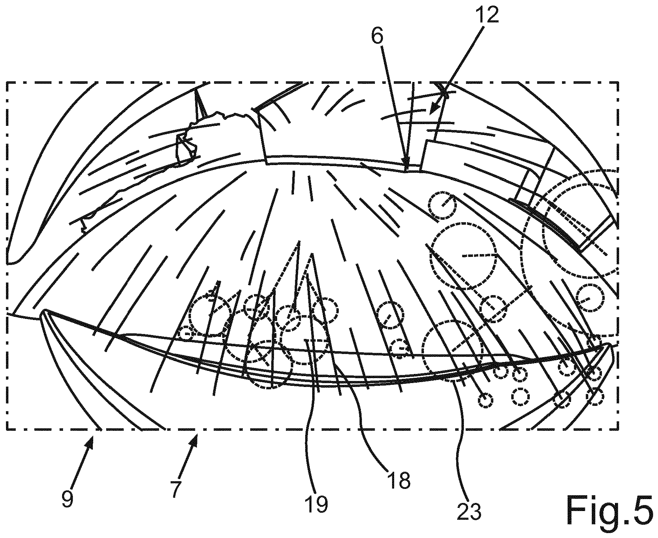

Fig. 5 shows the second image 9 of the environmental region 6. Furthermore, Fig. 5 shows the flow vectors 19 and the connecting line segments 18. Furthermore, the distance circles 23 are shown, based on which the distance 20 is determined and on which in turn the association to the class static or to the class dynamic depends. The smaller the distance circle 23 and thus the distance 20 is, the more likely the respective flow vector 19 is of a static object point P and is associated with the class static.

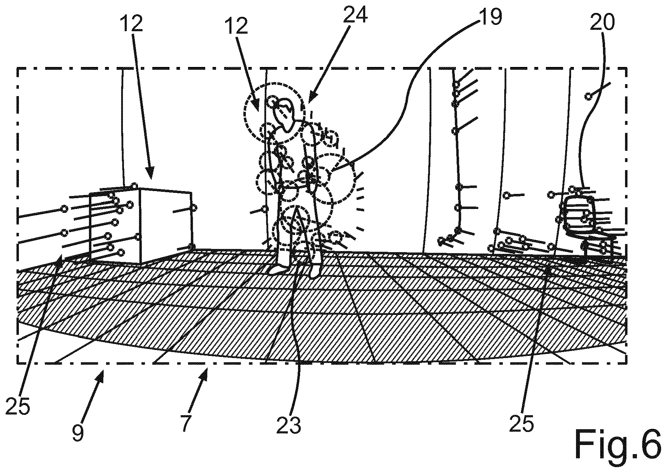

Fig. 6 shows the second image 9 of another scene, thus another environmental region 6. In the middle of the second image 9, there is a moved object 24, and static objects 25 are in the edge areas to the left and right in the second image 9. It is shown that the distance circles 23 and thus the distance 20 are greater in the moved object 24 - for example also greater than the first limit value - than the distance circle 23 and thus the distance 20 in the static objects 25. The moved object 24 or, stated otherwise, the flow vectors 19 of the moved object 24 are associated with the class dynamic, while the flow vectors of the static object 25 are associated with the class static.

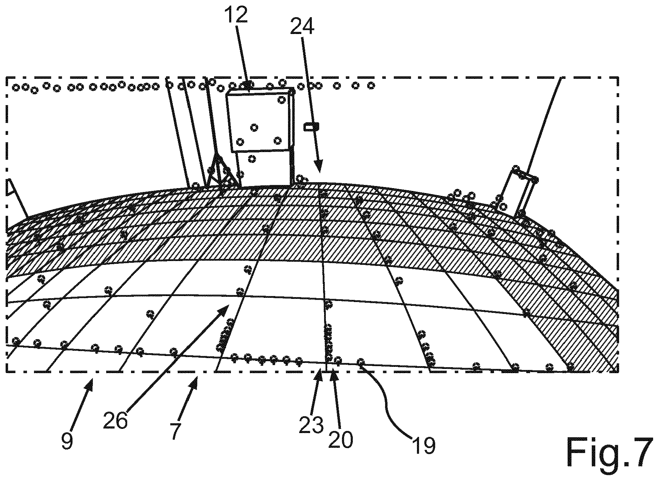

Fig. 7 shows the second image 9, which is used in this case to recognize a start of a movement of the motor vehicle 1. The start of the movement is recognized depending on the flow vectors 19 in a lower area 26. The lower area 26 for example extends over 10 percent or 20 percent or 30 percent or 40 percent or 50 percent of the lines of the second image 9, which are disposed at the bottom. The flow vectors 19 in the lower area 26 are determined based on objects in the environmental region 6, which are closer to the camera 3 than objects in the environmental region 6, which are in an upper area 27 of the second image 9. The flow vectors 19 in the lower area 26 therefore have a greater length than the flow vectors 19 in the upper area 27. Due to the greater length of the flow vectors 19 in the lower area 26, the start of the movement can be more precisely determined than with the flow vectors 19 in the upper area 27.

The recognition of the start of the movement proceeds as follows: the flow vectors 19 from the lower area 26 are extended such that they intersect in a vanishing point X or a point of intersection. The orthogonal distance from the vanishing point X to the flow vector 19 in the lower area 26 describes a distance, which differentiates the flow vectors 19 of the class static and the flow vectors 19 of the class dynamic. Thus, if a predetermined second portion of the flow vectors 19 exceeds the distance or the orthogonal distance from the vanishing point X to the respective flow vector 19, thus, the start of the movement of the motor vehicle 1 can be assumed.

The vanishing point X can be mathematically determined as follows:

$$O_k + a_k \cdot v_k = X, \qquad \forall k \in \{1, 2, ..., n\} \tag{3}$$

$$\sum_{k=1}^{n} O_k + \sum_{k=1}^{n} a_k v_k = nX \tag{4}$$

Which in turn can be resolved as follows:

$$\begin{bmatrix} 0 & v_1 & \cdots & v_{n-1} & v_n \\ v_1 & 0 & \cdots & v_{n-1} & v_n \\ \vdots & \vdots & \vdots & \vdots & \vdots \\ v_1 & v_2 & \cdots & v_{n-1} & 0 \end{bmatrix} \times \begin{bmatrix} a_1 \\ a_2 \\ \vdots \\ a_n \end{bmatrix} = \begin{bmatrix} nO_1 - \sum_{k=1}^{n} O_1 \\ nO_2 - \sum_{k=1}^{n} O_2 \\ \vdots \\ nO_n - \sum_{k=1}^{n} O_n \end{bmatrix} \tag{5}$$

$$V \times A = b \tag{6}$$

$$V^T \times V \times A = VT \times b \tag{7}$$

$$(V^TV)^{-1}(V^TV) \times A = (V^TV)^{-1}V^T \times b \tag{8}$$

$$A = (V^TV)^{-1}V^T \times b \tag{9}$$

Now, the vanishing point X can be determined based on equation 6 and equation 11. $O_k$ is the origin of the flow vectors 19, and $V_k$ is the set of the flow vectors 19 of the lower area 26.

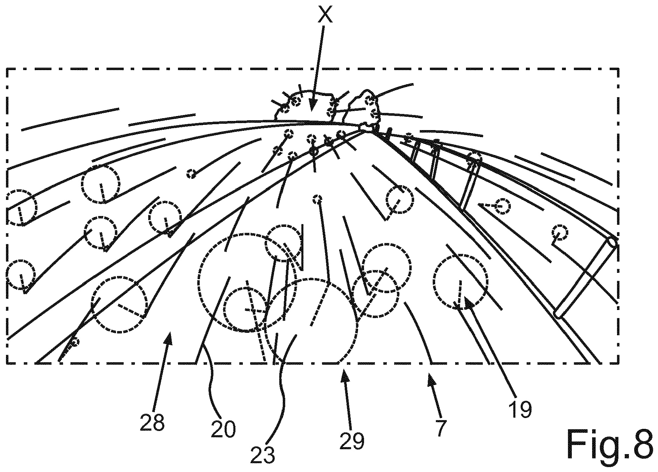

Fig. 8 shows a third image 29, which is used in this case to recognize a roadway unevenness of a roadway 28 in the environmental region 6. The recognition of the roadway unevenness occurs based on the distance 20, if the motion vector of the motor vehicle 1 was determined based on visual odometry. In case the motion vector of the motor vehicle 1 has been determined without the visual odometry, the roadway unevenness is determined such that the method for recognizing the start of the movement is used. Thus, the vanishing point X is then again determined and the distance from the flow vector 19 to the vanishing point X is determined, wherein the decision on the recognition of the roadway unevenness is made by the portion of the flow vectors 19, which exceed the distance. Thus, the portion can for example be more than 40 percent or more than 50 percent or more than 60 percent or more than 70 percent or more than 80 percent or more than 90 percent.

If the roadway unevenness is recognized, thus, the direction and/or the magnitude of the flow vector 19 are maintained and thus not adapted for the current image of the image sequence 7. For example, as shown in Fig. 8, this can be the case in the third image 29. In this case, the direction and/or the magnitude of the flow vector 19 are further used by the second image 9, which was previously captured.

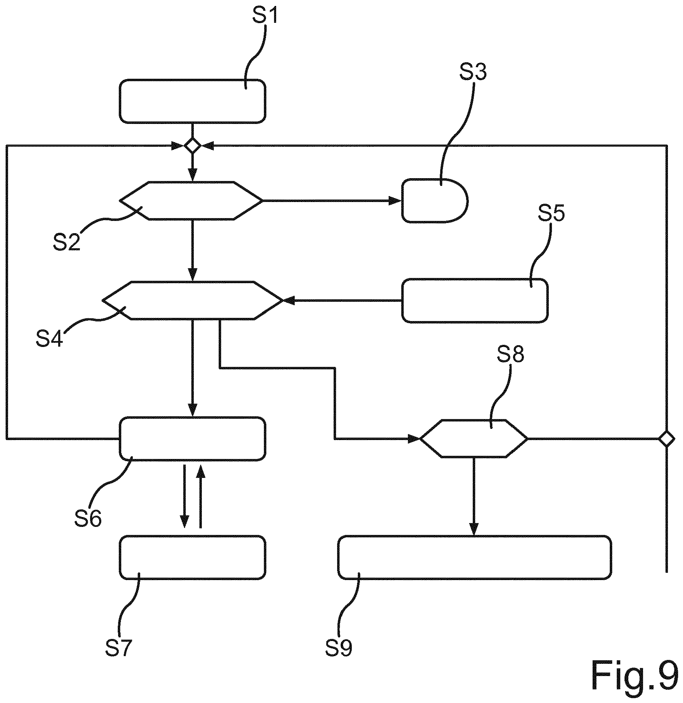

Fig. 9 describes the procedure for recognizing the roadway unevenness of the roadway 28. In a step S1, the flow vectors 19 are provided. In a step S2, it is examined if all of the flow vectors 19 have been processed. If it is determined in step S2 that all of the flow vectors 19 have been processed, thus, the method for recognizing the roadway unevenness is terminated in a step S3. Otherwise, a step S4 follows, in which it is examined if data of the visual odometry from a step S5 is available. If it is determined in step S4 that the data of the visual odometry is available, thus, the step S6 follows, in which it is recognized based on the distance 20 if the roadway unevenness is present in a step S7. The roadway unevenness is present if a predetermined number of the flow vectors 19 exceed a predetermined second limit value of the distance 20. If the data of the visual odometry is not present in step S4, thus, a step S8 follows, which continues the method based on the lower area 26 or a near area of the second image 9. If a lower area 26 cannot be determined in the step S8, thus, the method again begins in the step S2. If the lower area 26 can be determined, thus, a step S9 follows, in which the vanishing point X is determined and a distance from the respective flow vector 19 to the vanishing point X is determined. Now, if a predetermined portion of the flow vectors 19 with the respectively associated distance exceeds a limit value, thus, the roadway unevenness can be assumed.

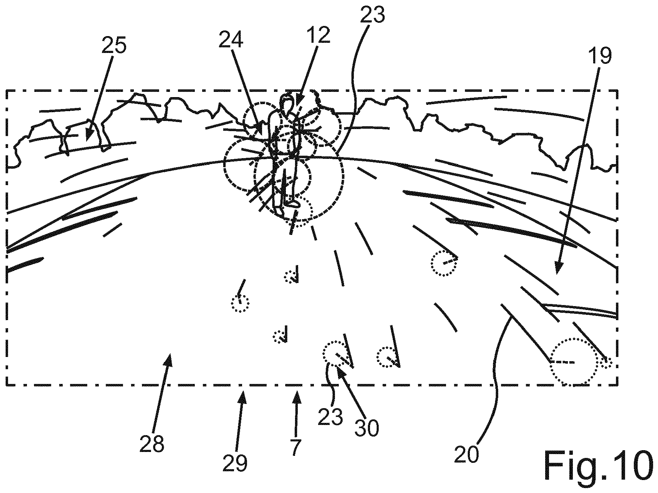

Fig. 10 shows the third image 29, in which flow vectors 19 are associated with a class noise 30. The flow vectors 19, which are associated with the class noise 30, can be determined by comparing the length and/or the orientation of the flow vectors 19 of the second image 9, thus an image preceding the third image 29, to the length and/or the orientation of the flow vectors 19 of the third image. If this comparison yields that the variation of the orientation and/or the variation of the magnitude has exceeded a limit value or a ratio, thus, these flow vectors 19 are associated with the class noise 30. The class noise 30 therefore contains flow vectors 19, which too much deviate from their previous orientation and/or their previous magnitude with respect to their orientation and/or their magnitude.

**Claims**

1. Method for classifying a flow vector (19) of an object point (P) of an object (12) in an environmental region (6) of a motor vehicle (1), which is determined according to the optical flow method in an image sequence (7) captured by a camera (3) of the motor vehicle (1), wherein a first pixel (p) of a first image (8) of the image sequence (7), which is captured by means of the camera (3) and a first projection center (11), and a corresponding second pixel (p*) of a second image (9) of the image sequence (7), which is captured by means of the camera (3) and a second projection center (15) different from the first projection center (11), are connected by the flow vector (19), **characterized by** the steps of:

   - determining a ray (10) from the first projection center (11) to the first pixel (p) and further to the object point (P),
   - determining a first auxiliary point (13) on the ray (10), which is disposed between the first pixel (p) and the object point (P),

- determining a second auxiliary point (14) on the ray (10), which is disposed farther away from the first projection center (11) compared to the object point (P),

- determining a plurality of auxiliary points on the ray (10) at different intervals on the ray (10),

- projecting the first auxiliary point (13) and the second auxiliary point (14) and the plurality of auxiliary points (22) into the second image (9) to form a convex polyline on the second image (9) by performing a translation and rotation corresponding to the motion of the motor vehicle (1),

- connecting a projected first auxiliary point (16) of the first auxiliary point (13) and a projected second auxiliary point (17) of the second auxiliary point (14) by a connecting line segment (18),

- determining a distance (20) from the second pixel (p*) which describes the shortest range to the connecting line segment (18) or further line segment (21) of the polyline and

- associating the flow vector (19) of the second pixel (p*) with a class static or a class dynamic depending on the determined distance (20).

2. Method according to claim 1,
**characterized in that**
the flow vector (19) is associated with the class static if the determined distance (20) falls below a predetermined first limit value, and the flow vector (19) is associated with the class dynamic if the determined distance (20) exceeds the predetermined first limit value.

3. Method according to claim 1 or 2,
**characterized in that**
a first parameter set ($M_{int}$) of an interior orientation of the camera (3) and/or a second parameter set ($M_{ext}$) of an exterior orientation of the camera (3) are taken into account in the projection.

4. Method according to any one of the preceding claims,
**characterized in that**
a motion vector of the motor vehicle (1), which is determined by means of odometry, is taken into account in the projection.

5. Method according to any one of the preceding claims,
**characterized in that**
the flow vector (19), which is associated with the class dynamic, is associated with a class noise if an orientation variation and/or a magnitude variation of the flow vector (19) of a third pixel of a third image (29) of the image sequence (7) exceeds a predetermined first portion compared to the second pixel (p*).

6. Method according to any one of the preceding claims,
**characterized in that**
the method is performed for a plurality of flow vectors (19) and herein a plurality of distances (20) is provided.

7. Method according to claim 6,
**characterized in that**
a roadway unevenness of a roadway (28) in the environmental region (6) is recognized depending on the plurality of distances (20).

8. Method according to claim 7,
**characterized in that**
the roadway unevenness is recognized if a predetermined number of the flow vectors (19) of the plurality of flow vectors (19) each exceeds a predetermined second limit value for the distance (20).

9. Method according to claim 7 or 8,
**characterized in that**
a direction and/or a magnitude of the flow vector (19) of a third image (29) following the second image (9) is replaced with a direction and/or a magnitude of the flow vector (19) of the second image (9) if the roadway unevenness is recognized.

10. Method according to any one of claims 6 to 9,
**characterized in that**

a start of a movement, in particular a driving off, of the motor vehicle (1) is recognized based on the flow vectors (19) of the plurality of flow vectors (19), which are disposed in a lower area (26) of the first image (8) and/or of the second image (9).

**11.** Method according to claim 10,
**characterized in that**
the start of the movement is recognized if less than a predetermined second portion of the plurality of flow vectors (19) intersect in a vanishing point (X) of the first image (8) and/or of the second image (9) by extending.

**12.** Method according to any one of the preceding claims,
**characterized in that**
at least one further auxiliary point is determined on the ray (10) and the at least one further auxiliary point is projected into the second image as a projected further auxiliary point (22).

**13.** Method according to claim 12,
**characterized in that**
the projected further auxiliary point (22) is disposed with at least one further connecting line segment (21) to the connecting line segment (18).

**14.** Driver assistance system (2) with a camera (3) and an evaluation unit (4), which is adapted to perform a method according to the preceding claims.

**15.** Motor vehicle (1) with a driver assistance system (2) according to claim 14.


**Patentansprüche**

**1.** Verfahren zum Klassifizieren eines Flussvektors (19) eines Objektpunkts (P) eines Objekts (12) in einem Umgebungsbereich (6) eines Kraftfahrzeugs (1), der gemäß dem optischen Flussverfahren in einer durch eine Kamera (3) des Kraftfahrzeugs (1) aufgenommenen Bildsequenz (7) bestimmt wird, wobei ein erster Bildpunkt (p) eines ersten Bilds (8) der Bildsequenz (7), das mittels der Kamera (3) und einem ersten Projektionszentrum (11) aufgenommen wird, und ein korrespondierender zweiter Bildpunkt (p*) eines zweiten Bilds (9) der Bildsequenz (7), das mittels der Kamera (3) und einem von dem ersten Projektionszentrum (11) unterschiedlichen zweiten Projektionszentrum (15) aufgenommen wird, durch den Flussvektor (19) verbunden werden, **gekennzeichnet durch** die folgenden Schritte:

- Bestimmen eines Strahls (10) von dem ersten Projektionszentrum (11) zu dem ersten Bildpunkt (p) und weiter zu dem Objektpunkt (P),
- Bestimmen eines ersten Hilfspunkts (13) auf dem Strahl (10), der zwischen dem ersten Bildpunkt (p) und dem Objektpunkt (P) angeordnet ist,
- Bestimmen eines zweiten Hilfspunkts (14) auf dem Strahl (10), der im Vergleich zu dem Objektpunkt (P) weiter von dem ersten Projektionszentrum (11) entfernt angeordnet ist,
- Bestimmen einer Mehrzahl von Hilfspunkten auf dem Strahl (10) in unterschiedlichen Intervallen auf dem Strahl (10),
- Projizieren des ersten Hilfspunkts (13) und des zweiten Hilfspunkts (14) und der Mehrzahl von Hilfspunkten (22) in das zweite Bild (9), um eine konvexe Polylinie auf dem zweiten Bild (9) durch Durchführen einer Translation und Rotation korrespondierend zu der Bewegung des Kraftfahrzeugs (1) auszubilden,
- Verbinden eines projizierten ersten Hilfspunkts (16) des ersten Hilfspunkts (13) und eines projizierten zweiten Hilfspunkts (17) des zweiten Hilfspunkts (14) durch ein Verbindungsliniensegment (18),
- Bestimmen eines Abstands (20) von dem zweiten Bildpunkt (p*), der die kürzeste Entfernung zu dem Verbindungsliniensegment (18) oder einem weiteren Liniensegment (21) der Polylinie beschreibt, und
- Zuweisen des Flussvektors (19) des zweiten Bildpunkts (p*) zu einer Klasse statisch oder einer Klasse dynamisch in Abhängigkeit von dem bestimmten Abstand (20).

**2.** Verfahren nach Anspruch 1,
**dadurch gekennzeichnet, dass**
der Flussvektor (19) der Klasse statisch zugewiesen wird, falls der bestimmte Abstand (20) unter einen vorbestimmten ersten Grenzwert fällt, und der Flussvektor (19) der Klasse dynamisch zugewiesen wird, falls der bestimmte Abstand (20) den vorbestimmten ersten Grenzwert überschreitet.

3. Verfahren nach Anspruch 1 oder 2,
**dadurch gekennzeichnet, dass**
ein erster Parametersatz ($M_{int}$) einer inneren Orientierung der Kamera (3) und/oder ein zweiter Parametersatz ($M_{ext}$) einer äußeren Orientierung der Kamera (3) bei der Projektion berücksichtigt werden.

4. Verfahren nach einem der vorhergehenden Ansprüche,
**dadurch gekennzeichnet, dass**
ein Bewegungsvektor des Kraftfahrzeugs (1), der mittels Odometrie bestimmt wird, bei der Projektion berücksichtigt wird.

5. Verfahren nach einem der vorhergehenden Ansprüche,
**dadurch gekennzeichnet, dass**
der Flussvektor (19), der der Klasse dynamisch zugewiesen ist, einer Klasse Rauschen zugewiesen wird, falls eine Orientierungsänderung und/oder eine Betragsänderung des Flussvektors (19) eines dritten Bildpunkts eines dritten Bilds (29) der Bildsequenz (7) im Vergleich zu dem zweiten Bildpunkt (p*) einen vorbestimmten ersten Anteil überschreitet.

6. Verfahren nach einem der vorhergehenden Ansprüche,
**dadurch gekennzeichnet, dass**
das Verfahren für eine Mehrzahl von Flussvektoren (19) durchgeführt wird und hierbei eine Mehrzahl von Abständen (20) bereitgestellt wird.

7. Verfahren nach Anspruch 6,
**dadurch gekennzeichnet, dass**
eine Fahrbahnunebenheit einer Fahrbahn (28) in dem Umgebungsbereich (6) in Abhängigkeit von der Mehrzahl von Abständen (20) erkannt wird.

8. Verfahren nach Anspruch 7,
**dadurch gekennzeichnet, dass**
die Fahrbahnunebenheit erkannt wird, falls eine vorbestimmte Anzahl der Flussvektoren (19) der Mehrzahl von Flussvektoren (19) jeweils einen vorbestimmten zweiten Grenzwert für den Abstand (20) überschreitet.

9. Verfahren nach Anspruch 7 oder 8,
**dadurch gekennzeichnet, dass**
eine Richtung und/oder ein Betrag des Flussvektors (19) eines dritten Bilds (29), das auf das zweite Bild (9) folgt, durch eine Richtung und/oder einen Betrag des Flussvektors (19) des zweiten Bilds (9) ersetzt wird, falls die Fahrbahnunebenheit erkannt wird.

10. Verfahren nach einem der Ansprüche 6 bis 9,
**dadurch gekennzeichnet, dass**
ein Beginn einer Bewegung, insbesondere ein Anfahren, des Kraftfahrzeugs (1) basierend auf den Flussvektoren (19) der Mehrzahl von Flussvektoren (19) erkannt wird, die in einem unteren Bereich (26) des ersten Bilds (8) und/oder des zweiten Bilds (9) angeordnet sind.

11. Verfahren nach Anspruch 10,
**dadurch gekennzeichnet, dass**
der Beginn der Bewegung erkannt wird, falls sich weniger als ein vorbestimmter zweiter Anteil der Mehrzahl von Flussvektoren (19) durch Verlängern in einem Fluchtpunkt (X) des ersten Bilds (8) und/oder des zweiten Bilds (9) schneiden.

12. Verfahren nach einem der vorhergehenden Ansprüche,
**dadurch gekennzeichnet, dass**
mindestens ein weiterer Hilfspunkt auf dem Strahl (10) bestimmt wird und der mindestens eine weitere Hilfspunkt als ein projizierter weiterer Hilfspunkt (22) in das zweite Bild projiziert wird.

13. Verfahren nach Anspruch 12,

**dadurch gekennzeichnet, dass**
der projizierte weitere Hilfspunkt (22) mit mindestens einem weiteren Verbindungsliniensegment (21) an dem Verbindungsliniensegment (18) angeordnet wird.

14. Fahrerassistenzsystem (2) mit einer Kamera (3) und einer Auswerteeinheit (4), das dazu ausgelegt ist, ein Verfahren nach den vorhergehenden Ansprüchen durchzuführen.

15. Kraftfahrzeug (1) mit einem Fahrassistenzsystem (2) nach Anspruch 14.

**Revendications**

1. Procédé de classification d'un vecteur de flux (19) d'un point d'objet (P) d'un objet (12) dans une région environnementale (6) d'un véhicule à moteur (1), qui est déterminé selon le procédé de flux optique dans une séquence d'images (7) capturée par une caméra (3) du véhicule à moteur (1), un premier pixel (p) d'une première image (8) de la séquence d'images (7), qui est capturée au moyen de la caméra (3) et d'un premier centre de projection (11), et un deuxième pixel correspondant (p*) d'une deuxième image (9) de la séquence d'images (7), qui est capturée au moyen de la caméra (3) et d'un deuxième centre de projection (15) différent du premier centre de projection (11), étant raccordés par le vecteur de flux (19), **caractérisé par** les étapes consistant à :

   - déterminer un rayon (10) du premier centre de projection (11) au premier pixel (p) et plus loin jusqu'au point d'objet (P),
   - déterminer un premier point auxiliaire (13) sur le rayon (10), qui est disposé entre le premier pixel (p) et le point d'objet (P),
   - déterminer un deuxième point auxiliaire (14) sur le rayon (10), qui est disposé plus loin du premier centre de projection (11) par comparaison avec le point d'objet (P),
   - déterminer une pluralité de points auxiliaires sur le rayon (10) à différents intervalles sur le rayon (10),
   - projeter le premier point auxiliaire (13) et le deuxième point auxiliaire (14) et la pluralité de points auxiliaires (22) dans la deuxième image (9) pour former une polyligne convexe sur la deuxième image (9) en réalisant une translation et une rotation correspondant au mouvement du véhicule à moteur (1),
   - raccorder un premier point auxiliaire projeté (16) du premier point auxiliaire (13) et un deuxième point auxiliaire projeté (17) du deuxième point auxiliaire (14) par un segment de ligne de raccordement (18),
   - déterminer une distance (20) à partir du deuxième pixel (p*) qui décrit la portée la plus courte jusqu'au segment de ligne de raccordement (18) ou un autre segment de ligne (21) de la polyligne et
   - associer le vecteur de flux (19) du deuxième pixel (p*) à une dynamique de classe ou une dynamique de classe en fonction de la distance déterminée (20).

2. Procédé selon la revendication 1,
   **caractérisé en ce que**
   le vecteur de flux (19) est associé à la statique de classe si la distance déterminée (20) est inférieure à une première valeur limite prédéterminée, et le vecteur de flux (19) est associé à la dynamique de classe si la distance déterminée (20) dépasse la première valeur limite prédéterminée.

3. Procédé selon la revendication 1 ou la revendication 2,
   **caractérisé en ce que**
   un premier ensemble de paramètres ($M_{int}$) d'une orientation intérieure de la caméra (3) et/ou un deuxième ensemble de paramètres ($M_{ext}$) d'une orientation extérieure de la caméra (3) sont pris en compte dans la projection.

4. Procédé selon l'une quelconque des revendications précédentes,
   **caractérisé en ce que**
   un vecteur de mouvement du véhicule à moteur (1), qui est déterminé par odométrie, est pris en compte dans la projection.

5. Procédé selon l'une quelconque des revendications précédentes,
   **caractérisé en ce que**
   le vecteur de flux (19), qui est associé à la dynamique de classe, est associé à un bruit de classe si une variation d'orientation et/ou une variation d'amplitude du vecteur de flux (19) d'un troisième pixel d'une troisième image (29) de la séquence d'images (7) dépasse une première portion prédéterminée par comparaison avec le deuxième pixel (p*).

6. Procédé selon l'une quelconque des revendications précédentes,
**caractérisé en ce que**
le procédé est réalisé pour une pluralité de vecteurs de flux (19) et une pluralité de distances (20) est prévue.

7. Procédé selon la revendication 6,
**caractérisé en ce que**
une irrégularité de chaussée d'une chaussée (28) dans la région environnementale (6) est reconnue en fonction de la pluralité de distances (20).

8. Procédé selon la revendication 7,
**caractérisé en ce que**
l'irrégularité de chaussée est reconnue si un nombre prédéterminé de vecteurs de flux (19) de la pluralité de vecteurs de flux (19) dépasse une deuxième valeur limite prédéterminée pour la distance (20).

9. Procédé selon la revendication 7 ou la revendication 8,
**caractérisé en ce que**
une direction et/ou une grandeur du vecteur de flux (19) d'une troisième image (29) suivant la deuxième image (9) est remplacée par une direction et/ou une grandeur du vecteur de flux (19) de la deuxième image (9) si l'irrégularité de chaussée est reconnue.

10. Procédé selon l'une quelconque des revendications 6 à 9,
**caractérisé en ce que**
un début d'un déplacement, en particulier un départ, du véhicule à moteur (1) est reconnu sur la base des vecteurs de flux (19) de la pluralité de vecteurs de flux (19), qui sont disposés dans une zone inférieure (26) de la première image (8) et/ou de la deuxième image (9).

11. Procédé selon la revendication 10,
**caractérisé en ce que**
le début du déplacement est reconnu si moins d'une deuxième portion prédéterminée de la pluralité de vecteurs de flux (19) se croise dans un point de fuite (X) de la première image (8) et/ou de la deuxième image (9) en s'étendant.

12. Procédé selon l'une quelconque des revendications précédentes,
**caractérisé en ce que**
au moins un autre point auxiliaire est déterminé sur le rayon (10) et l'au moins un autre point auxiliaire est projeté dans la deuxième image sous la forme d'un autre point auxiliaire projeté (22).

13. Procédé selon la revendication 12,
**caractérisé en ce que**
l'autre point auxiliaire projeté (22) est disposé avec au moins un autre segment de ligne de raccordement (21) sur le segment de ligne de raccordement (18).

14. Système d'aide à la conduite (2) doté d'une caméra (3) et d'une unité d'évaluation (4), qui est conçue pour réaliser un procédé selon les revendications précédentes.

15. Véhicule à moteur (1) doté d'un système d'aide à la conduite (2) selon la revendication 14.

Fig.1

Fig.2

Fig.3

Fig.4

Fig.5

Fig.6

Fig.7

X

28    20    23    29    7    19

Fig.8

Fig.9

Fig.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DIANSHENG CHEN ; YUXIN CHEN ; TIANMIAO WANG.** Moving Object Detection by Multi-View Geometric Constraints and Flow Vector Classification. *Proceedings of the 2010 IEEE Int. Conf. on Robotics and Biomimetics,* 1630